# EUROPEAN PATENT APPLICATION

(11) **EP 4 385 863 A1**
(43) Date of publication of application: **19.06.2024**
(21) Application number: 23215836.0
(22) Date of filing: 12.12.2023
(51) Int. Cl.: B62D 33/06

(54) **IMPROVED CONNECTION SYSTEM FOR A CAB SUSPENSION FOR A HEAVY VEHICLE**

(30) Priority: 15.12.2022 IT 202200025707
(71) Applicant: On-Highway Brasil Ltda., 35.703-138 Sete Lagoas, Minas Gerais (BR)
(72) Inventor: DA COSTA LIMA, Neto Bernardo, 35.703-138 SETE LAGOAS (BR); DOMINGOS DE SA, Thiago Malaquias, 35.703-138 SETE LAGOAS (BR)
(74) Representative: Studio Torta S.p.A.

(57) **Abstract**

Connection system (1) comprising a seat assembly (2) and a pin assembly (3) and configured for connecting these latter, the pin system (20) comprising a pin (21) rigidly carried by a support portion (2') and a bushing (22) slidably carried on the pin (21) and dampening means (25), such dampening means (25) providing a force opposite and function of the movement of the bushing (22), wherein the bushing (22) is fixedly housed within a seat (15) of the seat assembly (2).

## Description

### CROSS-REFERENCE TO RELATED APPLICATIONS

This patent application claims priority from Italian patent application no. 102022000025707 filed on December 15, 2022, the entire disclosure of which is incorporated herein by reference.

### TECHNICAL FIELD

The present invention concerns a connection system for a cab suspension.

The present invention finds its preferred, although not exclusive, application in heavy vehicle cab suspension. Reference will be made to this application by way of example below.

### BACKGROUND OF THE INVENTION

As known, heavy vehicles comprise a cab that may be carried in a suspended way by the chassis of the vehicle.

In such occurrence, it is provided a suspension system that carries the cab suspended with respect to the vehicle thereby allowing movements along different direction axes.

One way to provide such suspension system is realized between a pin fixedly carried by the cab and extending along a pin axis and a seat assembly that defines a seat for accommodating the pin.

The seat assembly is fixedly coupled to an elastic element such as a bellow to dampen vertical motion of the cab and carried by the chassis by a movable connection such as a hinge to retain transversal and/or longitudinal motion of the cab.

The seat assembly cooperates by sliding in the seat with the seat assembly along the pin axis direction to allow relative movements between such elements. In transversal direction to pin axis the seat is usually configured to allow relative motion also on such direction.

The aforementioned cooperation between the pin and the seat assemblies lead to various drawbacks.

First, the movement along pin axis may extend over the possible length of the pin, thereby leading to a direct coupling between the cab and the seat assembly that may lead to overstresses to the fixation between the seat assembly and the elastic element and/or the chassis.

Furthermore, the sliding is maintained by use of grease between the pin and the seat. Since such space is opened towards the environment the grease tends to dry and to collect impurities. Therefore, the movement between the pin and the seat is obstacle and there is need to a continuous maintenance.

The aforementioned overstresses and lack of proper lubrication may lead to unforeseeable failures of the suspension system. Such failures may be represented by a lack of suspension properties, by deformation of suspension elements that needs substitution of the entire suspension system or by fatal ruptures that may lead to dramatic accidents.

In view of the above, the need is felt to improve existing connection system for suspension system for a cab in a heavy vehicle.

An aim of the present invention is to satisfy the above mentioned needs in a cost-effective and optimized manner.

### SUMMARY OF THE INVENTION

The aforementioned aim is reached by connection system, a suspension system and a vehicle as claimed in the appended set of claims.

### BRIEF DESCRIPTION OF DRAWINGS

For a better understanding of the present invention, a preferred embodiment is described in the following, by way of a non-limiting example, with reference to the attached drawings wherein:

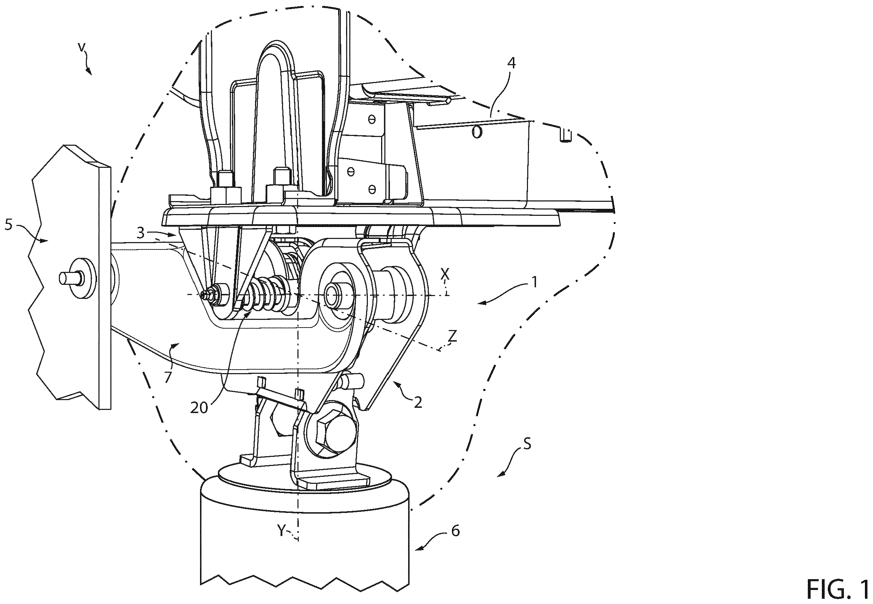

- Figure 1 is perspective view of a connection system according to the invention for a suspension system for a cab of a vehicle;
- Figure 2 is a perspective exploded view of the connection system of figure 1;
- Figure 3 is a lateral schematic view of a portion of the connection system of figure 1;

- Figure 4 is a schematic cross-section of the connection system according to the invention along axes XY of figure 1; and
- Figure 5 is a schematic cross-section of the connection system according to the invention along axes YZ of figure 1.

### DETAILED DESCRIPTION OF THE INVENTION

In the attached figures reference 1 indicates in its entirety a connection system 1 making part of a suspension system S of a vehicle V such as a heavy vehicle, for instance a truck.

The connection system 1 essentially comprises a seat assembly 2 and a pin assembly 3 configured to cooperate together by contact as detailed in the following. The pin assembly 3 is fixedly carried by a cab 5 of the vehicle V while the seat assembly 2 is carried by the chassis of the vehicle V.

In the preferred schematic shown embodiment, the seat assembly 2 is fixedly coupled to an elastic element 6, such as an air bellow, in particular to the top portion thereof according to a vertical axis Y direction and movably carried by a support arm 7 to the chassis 5. In particular, the support arm 7 is hinged to both its extremities, the one connected to the chassis 5 and the other connected to seat assembly 2.

Referring to the seat assembly 2, it comprises a fixing portion 2' and a cooperation portion 2". In particular, the fixing portion 2' comprises a pair of flanges 11 configured to allow the coupling to the elastic element 6, e.g. by threaded elements .

The cooperation portion 2" comprises a pair of plate-like elements 12 coupled together and spaced along a first axis X direction that is perpendicular to the vertical axis Y direction to delimit a space 13. In particular, the first axis X direction coincides in the proposed embodiment with the vehicle longitudinal axis, i.e. the driving direction.

Preferably, plate like elements 12 are connected together at least by the fixing portion 2'. The space 13 is configured to house further elements of the suspension such as a hinge 14 for connection of support arm 7.

The plate like elements 12 defines a seat 15, in particular extending along first axis X direction passing through the plate like elements 12 and opened along vertical axis Y direction faced to the pin assembly 3. Preferably, seat 15 is curved and more preferably U-shaped.

According to the above, seat 15 is substantially defined as a recess between a pair of protruding portion 12' laterally with respect to seat 15 along a second axis Z direction. The second axis Z is perpendicular to both the vertical axis Y and the first axis X; in the disclosed embodiment it coincides with the transversal axis of the vehicle V.

The pin assembly 3 essentially comprises a fixing portion 3' that is fixedly carried by the cab 4 and a that may comprise a plate wall 18 configured to be fixed to the cab, e.g. by threaded elements.

The pin assembly 3 further comprises a support portion 3" preferably comprising a pair of cantilevered portions 19 that extends from the plate wall 18 getting away from the cab 4, preferably in a perpendicular direction that is in particular coincident with the vertical axis Y direction.

The pair of cantilevered portions 19 extends from terminal edges of the plate wall 18 along first axis X direction, thereby being spaced along such direction. In particular, such cantilevered portions 19 have a substantial trigonal shape in a plane defined by axes Y and Z.

The pin assembly 3 further comprises a pin system 20 that is fixedly carried by the cantilevered portion 19 in a terminal extremity portion thereof opposite to plate wall 18 and configured to cooperate by contact with the seat assembly 2, in particular within the seat 15 thereof.

The pin system 20 essentially comprises a pin 21 fixedly carried by the cantilevered portions 19 and extending therefore along first axis X direction and preferably having a circular cross-section along such direction.

In particular, the cantilevered portions 19 defines holes for housing the pin 21 in rigid manner; in particular the pin 21 passes through cantilevered portions 21 via aforementioned holes extending over the space delimited by cantilevered portion 21 along first axis X direction.

Pin system 20 further comprises a bushing 22 housed about pin 21 in direct contact with its external surface in a sliding manner along first axis X and cooperating by contact with seat 15.

In particular, pin system 20 comprises a dampening system 25 configured to exert a force between the bushing 22 and the cantilevered portions 19 that is opposite to the movement of the bushing 22 and function to its movement, e.g. proportional to such movement. In particular, dampening system 25 is provided between each side of the bushing 22 and the respective cantilevered portions 19.

Advantageously, dampening system 25 comprises a sliding ring 26 configured to cooperate in direct contact with the external surface of pin 21 in a sliding manner along first axis X and in direct contact axially with bushing 22. The dampening system 25 further comprises elastic means 27 comprising a first end in contact with the one of the cantilevered portions 19 and the other in contact with the sliding ring 26.

According to the above, the bushing 22 can slide over pin 21 along first axis X in function of the relative motion between seat assembly 2 and pin assembly 3.

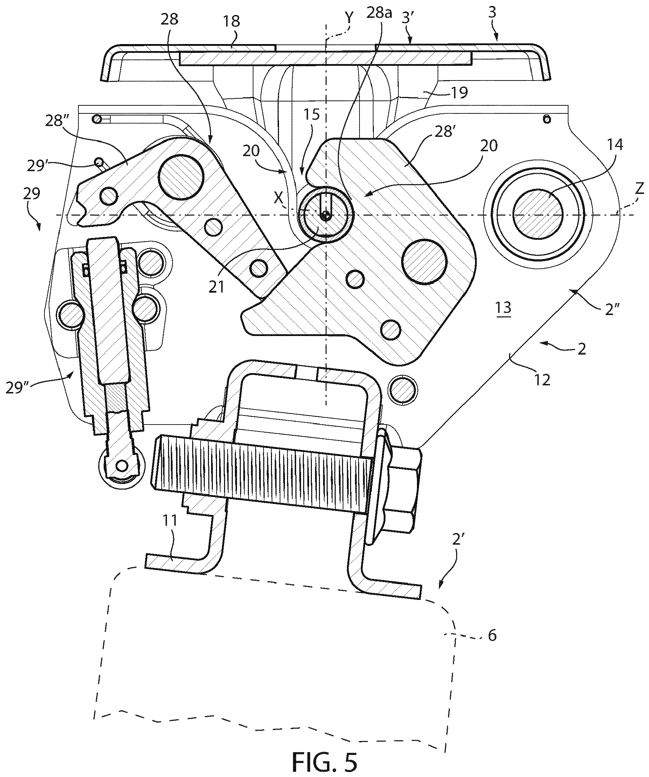

In greater detail, as better shown in figure 5, the connection system 1 further comprises clamping means 28 configured to assume a first operative position voted to maintain the bushing 22 secured fixed within seat 15 and a second position that allows extraction of bushing 22 from seat 15. In detail such clamping means 28 are carried by seat assembly 2, in particular in space 13.

In detail, clamping means 28 comprises at least a hook element 28' configured to define a seat 28a that is resealable configured to assume a first operative position voted to maintain the bushing 22 secured fixed within seat 15 and a second position that allows extraction of bushing 22 from seat 15.

In the disclosed embodiment the clamping means 28 comprises a leverage element 28" configured to cooperate by contact with the hook element 28' to maintain this latter in its position of engagement with bushing 22.

Preferably the hook element 28' and the leverage element 28" are carried by plates 12 by hinge connection that preferably allow rotation about respective hinge axis parallel to the first axis X.

The clamping means 28 may further comprises retaining means 29 configured to maintain the hook element 28' and/or the leverage element 28" in the engagement position with pin system 20.

In detail the retaining means 29 of the disclosed embodiment comprises first retaining means 29' configured to maintain leverage element 28" in contact with the hook element 28' and preferably realized as a coil spring and second retaining means 29" configured to selectively act against the first retaining means 29' to free hook element 28' from the cooperation with the leverage element 28".

The second retaining means 29" advantageously comprises a hydraulic cylinder that is preferably controlled by an electric valve and configured to selectively expand to move leverage element 28" against the force exerted by first retaining means 28'.

Referring back to pin system 20, it further comprises a lubrication system 30 configured to lubricate the surface of pin 21. In particular, lubrication system 30 is integrated in pin 21.

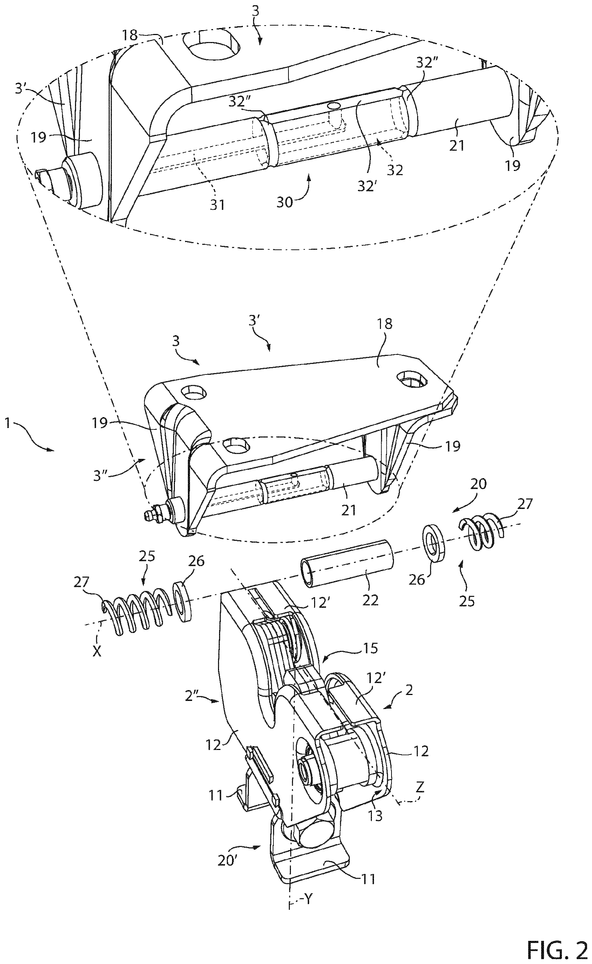

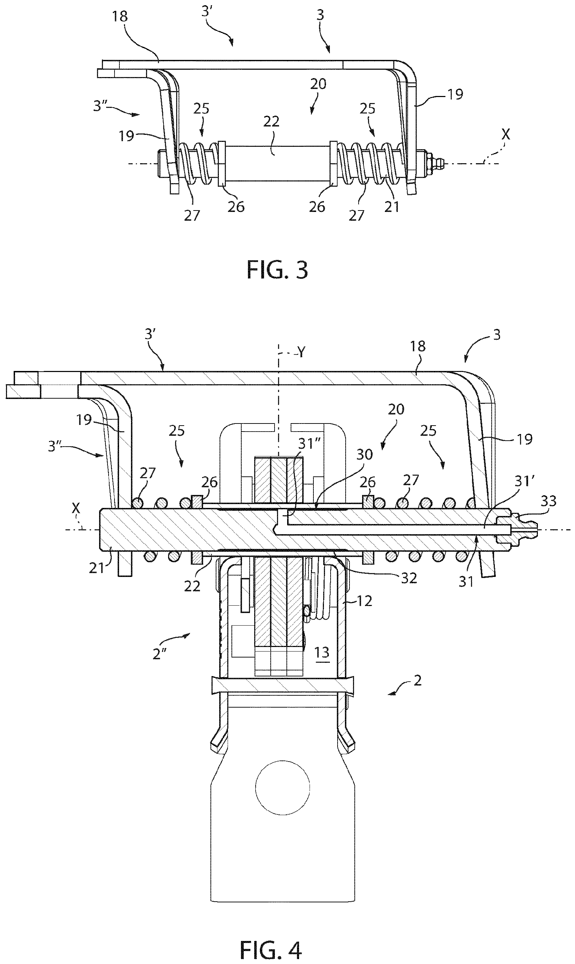

In detail, as better shown in figures 2 and 4, the lubrication system 30 comprises a conduit 31 that extends along the pin 21 and allows fluidic communication between the environment and the external surface of pin 21.

In detail, conduit 31 comprises a first opening that is realized in a terminal extremity of the pin 21 and a second opening that is realized on the external lateral surface thereof. Preferably second opening is realized in radial correspondence of bushing 22 and more preferably in the middle of pin 21 along first axis X direction.

According to the above, the conduit 31 comprises a main portion 31' extending parallel to first axis X direction and preferably coaxial to pin 21 axis and an auxiliary portion 31" extending incident to the main portion 31' and preferably as disclosed parallel to vertical axis Y.

Referring to the enlarged portion of figure 3, the lubrication system 30 further comprises a plurality of grooves 32 realized on the lateral surface of pin 21 and fluidly connected to conduit 31.

In particular, such grooves 32 are realized radially in correspondence of bushing 22. More preferably, such plurality of grooves 32 has a topology that is symmetric with respect to YZ plane and the opening of conduit 31 on the surface of pin 21.

In detail, the grooves 32 comprises at least a longitudinal groove 32' extending linearly along first axis X direction. In the disclosed embodiment, grooves 32 comprise a pair of longitudinal grooves 32' extending opposite one with respect to the other along vertical axis Y direction.

The grooves 32 further comprises at least a circular groove 32" realized along at least part of the circumference of the lateral surface of pin 21 and hydraulically continuous to the at least one longitudinal groove 32'.

In the disclosed embodiment, two circular grooves 32" are present extending all about the lateral surface of pin 21 and connecting the two opposite longitudinal grooves 32' .

The lubrication system 30 further comprises a plug 33 configured to selectively inserted within the opening of conduit 31 that is opened to the environment in order to selectively isolate the latter from the environment.

The operation of the embodiment of the invention as described above is the following.

Referring to the general operation of the connection system 1, the seat assembly 2 coupled via clamping means 28 is engaged to bushing 22 that therefore can slide over pin 21 of pin system 20. When cab 4 and chassis 5 moves relatively vertical compensation is given by other elements of the suspension S, e.g. the elastic element 6, and the movement along first axis X direction is compensated by dampening system 25 that forward and rearward to first axis X direction acts against the imparted movement.

If there is need to uncouple the seat assembly 2 and the pin system 20, it is sufficient to disassemble bushing 22 from clamping means 28, e.g. by acting on the second retention means 29" that move lever element 28" freeing the hook element 28'.

If there is need to lubricate the pin system 20 the user may free conduit 31 from plug 33 and insert the lubrication fluid in conduit 31 thereby reaching in uniform way all the space comprised between bushing 22 and pin 21.

In view of the foregoing, the advantages of connection system, suspension system and vehicle according to the invention are apparent.

Thanks to the use of the pin system 20 the relative movements along first axis X direction are reduced thereby avoiding the above described drawbacks to suspension elements. Moreover, since such movements are dampened, the comfort of the driver is increased.

In particular, since the movements are dampened, the working angles of the elastic elements, i.e. of bellows, are preserved.

Moreover, the described layout allows a easy and accessible coupling and uncoupling between the seat assembly and the pin system thereby allowing easy access for cleaning and maintenance.

Furthermore, the proposed lubrication system integrated into the pin allows to improve lubrication of the overall pin system and to avoid use of grease, thereby solving the above discussed problems.

In particular, the access for lubrication via conduit in the pin is easier, safer and more effective than in known pin system.

Indeed, the use of conduit and grooves for distributing lubrication fluid allow to optimize the movement between bushing and pin.

Moreover, the proposed structure of pin and ring element allows to maintain the lubricated element substantially isolated from the environment thereby avoiding the penetration of dirty elements.

It is clear that modifications can be made to the described connection system, suspension system and vehicle which do not extend beyond the scope of protection defined by the claims.

For example, the shape of the elements of the seat assembly and of the pin system may vary within the scope of the claims.

Clearly, the bushing may be fixed to the cab via clamping means carried by this latter.

The lubrication system may comprise a different layout or being simply carried by the pin assembly.

Similarly, elastic means of the dampening means may be realized by different typology of springs and sliding ring may be realized as one piece with bushing or being absent.

## Claims

1. Connection system (1) comprising a seat assembly (2) and a pin assembly (3) and configured for connecting said seat assembly (2) and said pin assembly (3)
said pin assembly (3) comprising a fixing portion (3') configured to be fixed to a cab (4) of a vehicle (V), a support portion (3") carried by said fixing portion (3') and a pin system (20) carried by said support portion (3")
said seat assembly (2) comprising a fixing portion (2') configured to be fixed to an elastic element (5) of a suspension system (S) provided between said cab (4) and a chassis (6) of said vehicle (V) and a cooperation portion (2") carried by said fixing portion (2') and defining a seat (15) configured to cooperate at contact with said pin system (20),
said pin system (20) comprising a pin (21) rigidly carried by said support portion (21) and a bushing (22) slidably carried on said pin (21) and dampening means (25) operatively interposed between said bushing (22) and said support portion (3"), said dampening means (25) providing a force opposite and function of the movement of said bushing (22), wherein said bushing (22) being fixedly housed within said seat (15) of said seat assembly (2).

2. Connection system according to claim 1, wherein said dampening means (25) comprises elastic means (27).

3. Connection system according to claim 2, wherein said elastic means (27) comprises a coil spring housed about said ping (21).

4. Connection system according to claim 2, wherein said dampening means (25) comprises a sliding ring (26) carried in a sliding manner by said pin (21) and cooperating at contact along the longitudinal axis of said pin (21) with said bushing (22) and said elastic means (27) .

5. Connection system according to any of the preceding claims, wherein said fixing portion (3') of said pin system (3) comprises a plate wall (18) and said support portion (3") comprises a pair of cantilevered walls (19) extending from extremities of said plate wall (18) along pin (21) longitudinal axis direction.

6. Connection system according to any of the preceding claims, wherein said fixing portion (2') of said seat assembly (2) comprises at least a flange (11) configured to be connected to said elastic element (6).

7. Connection system according to any of the preceding claims, wherein said cooperation portion (2") comprises at least a pair of plate-like elements (12) spaced one with respect to the other defining a space (13) and defining seat (15) passing through themselves.

8. Connection system according to claim 7, wherein said seat (15) is U-shaped.

9. Connection system according to any of the preceding claims, further comprising clamping means (28) configured to assume a first position configured maintain said bushing (22) secured within said seat (15) and a second position configured to free said bushing (22) from said seat (15).

10. Connection system according to claim 9, wherein said clamping means (28) are carried by said seat assembly (2) .

11. Connection system according to claim 9 and 7, wherein said clamping means (28) are housed within said space (13).

12. Connection system according to any of claims 9 to 11, wherein said clamping means (28) comprises at least a hook element (28') defining a seat (28a) configured to house said bushing (22), said hook element (28') being configured to assume a first position wherein said bushing (22) is secured within said seat (28a) and a second position wherein said bushing (22) is freed from said seat (28a) .

13. Connection system according to any of claims 9 to 12, further comprising retaining means (29) configured to maintain said clamping means (28) in their first position.

14. Connection system according to any of the preceding claims comprising a lubrication system (30) for lubricating said bushing (22).

15. Connection system according to claim 14 wherein said lubrication system (30) is integrated within said pin (21) .

16. Suspension system (S) configured for suspending a cab (4) of a vehicle (V) with respect to a chassis (5) thereof, said suspension system (S) comprising an elastic element (6) connected between said chassis (5) and said cab (4) via a connection system (1) according to any of the preceding claims.

17. Vehicle (V) comprising a cab (4) and a chassis (5) and a suspension system (S) according to claim 16.
